# EUROPEAN PATENT APPLICATION

(11) **EP 3 229 508 A1**
(43) Date of publication of application: **11.10.2017**
(21) Application number: 14908840.3
(22) Date of filing: 26.12.2014
(51) Int. Cl.: H04W 8/24

(54) **METHOD AND APPARATUS FOR ADJUSTING NETWORK MODE**

(71) Applicant: Huawei Technologies Co., Ltd., Longgang District Shenzhen, Guangdong 518129 (CN)
(72) Inventor: DUAN, Yun, Shenzhen Guangdong 518129 (CN); YI, Yanni, Shenzhen Guangdong 518129 (CN)
(74) Representative: Gill Jennings & Every LLP
(86) International application number: PCT/CN2014/095176
(87) International publication number: WO 2016/101272

(57) **Abstract**

The present invention relates to the field of communications network technologies, and discloses a method and an apparatus for adjusting a network mode, to resolve a problem that a security risk exists in a home network. In embodiments of the present invention, person identity information in a preset range is obtained, where the person identity information includes person identity features of all persons in the preset range; then, when it is determined, according to the person identity features, that there is a non-family member in the preset range, a guest mode is enabled. The solutions provided in the embodiments of the present invention are applicable to mode adjustment of a router.

## Description

### TECHNICAL FIELD

The present invention relates to the field of communications network technologies, and in particular, to a method and an apparatus for adjusting a network mode.

### BACKGROUND

With rapid development of wireless network technologies, a router is used more widely at home, and the router is a device connecting to a local area network and a wide area network in the Internet. When the router is used at home, the router is mainly used to send a network signal, so that a mobile terminal can access a network by using the network signal sent by the router. In the prior art, modes of a router may be classified into a home mode and a guest mode. A device accessing the router in the home mode may modify configuration information of the router, and the configuration information of the router includes: access permission of the router, a password for accessing the router, and the like. A device accessing the router in the guest mode cannot modify the configuration information of the router, and to keep security of a home network, when there is a visitor, a family member may manually enable the guest mode of the router.

However, when the family member does not manually enable the guest mode, a guest device may access the router in the home mode, and in this case, the guest device has a capability of modifying the configuration information of the router. Therefore, if the guest mode is not enabled in time, there is still a great security risk in a home network.

### SUMMARY

Embodiments of the present invention provide a method and an apparatus for adjusting a network mode, to resolve a problem that a security risk exists in a home network.

According to a first aspect, an embodiment of the present invention provides a method for adjusting a network mode, where the method is applied to a router, and the method includes:
obtaining person identity information in a preset range, where the person identity information includes person identity features of all persons in the preset range; and
enabling a guest mode when determining, according to the person identity features, that there is a non-family member in the preset range.

With reference to the first aspect, in a first possible embodiment, before the obtaining person identity information in a preset range, the method further includes:
storing family member identity features;
the enabling a guest mode when determining, according to the person identity features, that there is a non-family member in the preset range includes:
   comparing the person identity features with each family member identity feature, and when a person identity feature that is different from each family member identity feature exists in the person identity features, enabling the guest mode.

With reference to the first aspect or the first possible embodiment of the first aspect, in a second possible embodiment, before the obtaining person identity information in a preset range, the method further includes:
storing home device information, where the home device information includes home adult device information and home kid device information.

With reference to the second possible embodiment of the first aspect, in a third possible embodiment, after the enabling a guest mode when determining, according to the person identity features, that there is a non-family member in the preset range, the method further includes:
receiving a first request, where the first request includes information about a first device applying to access a network in a home mode;
comparing the information about the first device with the home device information; and
when determining that the information about the first device exists in the home device information, allowing the first device, which applies to access the network in the home mode, to access the network in the home mode; or
when determining that the information about the first device does not exist in the home device information, forbidding the first device, which applies to access the network in the home mode, to access the network in the home mode.

With reference to any one of the first possible embodiment to the third possible embodiment of the first aspect, in a fourth possible embodiment, the family member identity features include a family adult identity feature and a family kid identity feature, and after the obtaining all person identity information in a preset range, the method further includes:
comparing the person identity features with each family member identity feature, and when the kid identity feature exists in the person identity features, enabling a kid mode, where the kid mode is a mode in which only a preset network and application can be accessed.

With reference to the fourth possible embodiment of the first aspect, in a fifth possible embodiment, after the comparing the information about the first device with the home device information, the method further includes:
when determining that the information about the first device exists in the home adult device information, allowing the first device, which applies to access the network in the home mode, to access the network in the home mode;
when determining that the information about the first device exists in the home kid device information, specifying that the first device, which applies to access the network in the home mode, accesses the network in the kid mode; or
when determining that the information about the first device does not exist in the home device information and does not exist in the home kid device information, forbidding the first device, which applies to access the network in the home mode, to the network in the home mode.

With reference to the fourth possible embodiment of the first aspect or the fifth possible embodiment of the first aspect, in a sixth possible embodiment, after the comparing the person identity features with each family member identity feature, and when the kid identity feature exists in the person identity features, enabling a kid mode, the method further includes:
receiving a second request, where the second request includes information about a second device applying to access the network in the guest mode;
comparing the information about the second device with the kid device information; and
when determining that the information about the second device is the same as the kid device information, specifying that the second device, which applies for the second request, accesses the network in the kid mode; or
when determining that the information about the second device is different from the kid device information, allowing the second device, which applies for the second request, to access the network in the guest mode.

With reference to the first aspect or any one of the foregoing possible embodiments of the first aspect, in a seventh possible embodiment, the person identity information in the preset range further includes a quantity of persons in the preset range in a preset period, and after the obtaining person identity information in a preset range, the method further includes:
when the quantity of persons is greater than or equal to a first quantity-of-persons preset value, enabling a first transmit power;
when the quantity of persons is less than the first quantity-of-persons preset value and greater than a second quantity-of-persons preset value, enabling a second transmit power; or
when the quantity of persons is less than a third quantity-of-persons preset value, enabling a third transmit power.

With reference to the first aspect or any one of the first possible embodiment to the sixth possible embodiment of the first aspect, in an eighth possible embodiment, the method further includes:
detecting a quantity of devices accessing the network by using the router;
when the quantity of devices is greater than or equal to a first device preset value, enabling a first transmit power;
when the quantity of devices is less than the first device preset value and greater than a second device preset value, enabling a second transmit power, or
when the quantity of devices is less than or equal to a third device preset value, enabling a third transmit power.

According to a second aspect, an embodiment of the present invention provides an apparatus for adjusting a network mode, where the apparatus is applied to a router, and the apparatus includes:
an obtaining unit, configured to obtain person identity information in a preset range, where the person identity information includes person identity features of all persons in the preset range; and
an enabling unit, configured to enable a guest mode when determining, according to the person identity features obtained by the obtaining unit, that there is a non-family member in the preset range.

With reference to the second aspect, in a first possible embodiment, the apparatus further includes: a storage unit, where
the storage unit is configured to store family member identity features; and
the enabling unit is further configured to compare the person identity features obtained by the obtaining unit with each family member identity feature stored in the storage unit, and when a person identity feature that is different from the each family member identity feature exists in the person identity features, enable the guest mode.

With reference to the second aspect or the first possible embodiment of the second aspect, in a second possible embodiment,
the storage unit is further configured to store home device information, where the home device information includes home adult device information and home kid device information.

With reference to the second possible embodiment of the second aspect, in a third possible embodiment, the apparatus further includes: a receiving unit, a comparison unit, and an authentication unit, where
the receiving unit is configured to: after the enabling unit enables the guest mode, receive a first request, where the first request includes information about a first device applying to access a network in a home mode;
the comparison unit is configured to compare the information about the first device with the home device information stored in the storage unit; and
the authentication unit is configured to: when determining that the information about the first device exists in the home device information, allow the first device, which applies to access the network in the home mode, to access the network in the home mode; or when determining that the information about the first device does not exist in the home device information, forbid the first device, which applies to access the network in the home mode, to access the network in the home mode.

With reference to any one of the first possible embodiment to the third possible embodiment of the second aspect, in a fourth possible embodiment, the family member identity features include a family adult identity feature and a family kid identity feature; and
the enabling unit is further configured to compare the person identity features obtained by the obtaining unit with each family member identity feature stored in the storage unit, and when the kid identity feature exists in the person identity features, enable a kid mode, where the kid mode is a mode in which only a preset network and application can be accessed.

With reference to the fourth possible embodiment of the second aspect, in a fifth possible embodiment,
the authentication unit is further configured to: when determining that the information about the first device exists in the home adult device information, allow the first device, which applies to access the network in the home mode, to access the network in the home mode; when determining that the information about the first device exists in the home kid device information, specify that the first device, which applies to access the network in the home mode, accesses the network in the kid mode; or when determining that the information about the first device does not exist in the home adult device information and does not exist in the home kid device information, forbid the first device, which applies to access the network in the home mode, to access the network in the home mode.

With reference to the fourth possible embodiment of the second aspect or the fifth possible embodiment of the second aspect, in a sixth possible embodiment,
the receiving unit is further configured to: after the enabling unit enables the kid mode, receive a second request, where the second request includes information about a second device applying to access the network in the guest mode;
the comparison unit is further configured to compare the information about the second device with the kid device information; and
the authentication unit is further configured to: when determining that the information about the second device is the same as the kid device information, specify that the second device, which applies for the second request, accesses the network in the kid mode; or when determining that the information about the second device is different from the kid device information, allow the second device, which applies for the second request, to access the network in the guest mode.

With reference to the second aspect or any one of the foregoing possible embodiments of the second aspect, in a seventh possible embodiment, the person identity information in the preset range further includes a quantity of persons in the preset range in a preset period; and
the apparatus further includes: a first power enabling unit, where
the first power enabling unit is configured to: when the quantity of persons is greater than or equal to a first quantity-of-persons preset value, enable a first transmit power; when the quantity of persons is less than the first quantity-of-persons preset value and greater than a second quantity-of-persons preset value, enable a second transmit power; or when the quantity of persons is less than or equal to a third quantity-of-persons preset value, enable a third transmit power.

With reference to the second aspect or any one of the first possible embodiment to the sixth possible embodiment of the second aspect, in an eighth possible embodiment, the apparatus further includes: a detection unit and a second power enabling unit, where
the detection unit is configured to detect a quantity of devices accessing the network by using the router; and
the second power enabling unit is configured to: when the quantity of devices is greater than or equal to a first device preset value, enable a first transmit power; when the quantity of devices is less than the first device preset value and greater than a second device preset value, enable a second transmit power; or when the quantity of devices is less than or equal to a third device preset value, enable a third transmit power.

According to a third aspect, an embodiment of the present invention provides an apparatus for adjusting a network mode, where the apparatus is applied to a router, and the apparatus includes:
a memory, configured to store information that includes a program instruction; and
a receiver, configured to obtain person identity information in a preset range, where the person identity information includes person identity features of all persons in the preset range; and
a processor, coupled with the memory and the receiver, configured to control execution of the program instruction, and specifically configured to: when determining, according to the person identity features, that there is a non-family member in the preset range, enable a guest mode.

With reference to the third aspect, in a first possible embodiment,
the memory is further configured to store family member identity features; and
the processor is further configured to compare the person identity features with each family member identity feature, and when a person identity feature that is different from each family member identity feature exists in the person identity features, enable the guest mode.

With reference to the first possible embodiment of the third aspect, in a second possible embodiment,
the memory is further configured to store home device information, where the home device information includes home adult device information and home kid device information.

With reference to the second possible embodiment of the third aspect, in a third possible embodiment,
the receiver is further configured to receive a first request, where the first request includes information about a first device applying to access a network in a home mode; and
the processor is further configured to compare the information about the first device with the home device information; when determining that the information about the first device exists in the home device information, allow the first device, which applies to access the network in the home mode, to access the network in the home mode; or when determining that the information about the first device does not exist in the home device information, forbid the first device, which applies to access the network in the home mode, to access the network in the home mode.

With reference to any one of the first possible embodiment to the third possible embodiment of the third aspect, in a fourth possible embodiment, the family member identity features include a family adult identity feature and a family kid identity feature; and
the processor is further configured to compare the person identity features received by the receiver with each family member identity feature stored in the memory, and when the kid identity feature exists in the person identity features, enable a kid mode, where the kid mode is a mode in which only a preset network and application can be accessed.

With reference to the fourth possible embodiment of the third aspect, in a fifth possible embodiment,
the processor is further configured to: after comparing the information about the first device with the home device information, when determining that the information about the first device exists in the home adult device information, allow the first device, which applies to access the network in the home mode, to access the network in the home mode; when determining that the information about the first device exists in the home kid device information, specify that the first device, which applies to access the network in the home mode, accesses the network in the kid mode; or when determining that the information about the first device does not exist in the home adult device information and does not exist in the home kid device information, forbid the first device, which applies to access the network in the home mode, to access the network in the home mode.

With reference to the fourth possible embodiment of the third aspect or the fifth possible embodiment of the third aspect, in a sixth possible embodiment,
the receiver is further configured to receive a second request, where the second request includes information about a second device applying to access the network in the guest mode; and
the processor is further configured to compare the information about the second device with the kid device information; and when determining that the information about the second device is the same as the kid device information, specify that the second device, which applies for the second request, accesses the network in the kid mode; or when determining that the information about the second device is different from the kid device information, allow the second device, which applies for the second request, to access the network in the guest mode.

With reference to the third aspect or any one of the foregoing possible embodiments of the third aspect, in a seventh possible embodiment, the person identity information in the preset range further includes a quantity of persons in the preset range in a preset period; and
the processor is further configured to: when the quantity of persons is greater than or equal to a first quantity-of-persons preset value, enable a first transmit power; when the quantity of persons is less than the first quantity-of-persons preset value and greater than a second quantity-of-persons preset value, enable a second transmit power; or when the quantity of persons is less than or equal to a third quantity-of-persons preset value, enable a third transmit power.

With reference to the third aspect or any one of the first possible embodiment to the sixth possible embodiment of the third aspect, in an eighth possible embodiment,
the processor is further configured to detect a quantity of devices accessing the network by using the router; and when the quantity of devices is greater than or equal to a first device preset value, enable a first transmit power; when the quantity of devices is less than the first device preset value and greater than a second preset value, enable a second transmit power; or when the quantity of devices is less than or equal to a third device preset value, enable a third transmit power.

According to a fourth aspect, an embodiment of the present invention provides a computer program product, including computer program code, where when a computing unit executes the computer program code, the computing unit executes actions according to the first aspect or any one of the first possible embodiment to the eighth possible embodiment of the first aspect.

According to the method and apparatus for adjusting a network mode provided in the embodiments of the present invention, person identity information in a preset range is obtained, where the person identity information includes person identity features of all persons in the preset range; then, when it is determined, according to the person identity features, that there is a non-family member in the preset range, a guest mode is enabled. Compared with the prior art in which a guest mode can only be manually enabled, in the present invention, a person identity feature can be recognized, and when it is determined that there is a non-family member in a preset range, the guest mode is automatically enabled. Because the guest mode is enabled in real time, a guest device can access a network only in the guest mode, ensuring security of a home network.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic logical structural diagram of a system for adjusting a network mode according to an embodiment of the present invention;
FIG. 2 is a schematic logical structural diagram of another system for adjusting a network mode according to an embodiment of the present invention;
FIG. 3 is a schematic logical structural diagram of still another system for adjusting a network mode according to an embodiment of the present invention;
FIG. 4 is a flowchart of a method for adjusting a network mode according to an embodiment of the present invention;
FIG. 5 is a flowchart of another method for adjusting a network mode according to an embodiment of the present invention;
FIG. 6 is a flowchart of a method for authenticating a request of accessing a network in a home mode in a method for adjusting a network mode according to an embodiment of the present invention;
FIG. 7 is a flowchart of another method for authenticating a request of accessing a network in a home mode in a method for adjusting a network mode according to an embodiment of the present invention;
FIG. 8 is a flowchart of still another method for adjusting a network mode according to an embodiment of the present invention;
FIG. 8 (a) is a schematic diagram of a setting interface of a router in a method for adjusting a network mode according to an embodiment of the present invention;
FIG. 8 (b) is a schematic diagram of a setting interface of another router in a method for adjusting a network mode according to an embodiment of the present invention;
FIG. 9 is a flowchart of a method for adjusting a transmit power of a router in a method for adjusting a network mode according to an embodiment of the present invention;
FIG. 9 (a) is a schematic diagram of a setting interface of still another router in a method for adjusting a network mode according to an embodiment of the present invention;
FIG. 9 (b) is a schematic diagram of a setting interface of yet another router in a method for adjusting a network mode according to an embodiment of the present invention;
FIG. 10 is a flowchart of another method for adjusting a transmit power of a router in a method for adjusting a network mode according to an embodiment of the present invention;
FIG. 11 is a schematic logical structural diagram of an apparatus for adjusting a network mode according to an embodiment of the present invention;
FIG. 12 is a schematic logical structural diagram of another apparatus for adjusting a network mode according to an embodiment of the present invention; and
FIG. 13 is a schematic logical structural diagram of a router in a method for adjusting a network mode according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

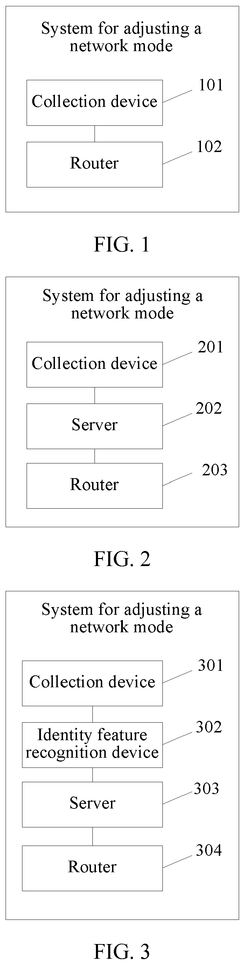

With reference to the present invention, as shown in FIG. 1, the present invention is applicable to a system for adjusting a network mode, and the system includes: a collection device 101 and a router 102.

The collection device 101 is configured to collect person identity information in a preset range. The person identity information includes identity features of all persons in the preset range and a quantity of persons in the preset range in a preset period.

The person identity features may be other biological features, such as facial identity features of persons, fingerprint information of persons, or voice information of persons, that correspond to the person identity features. The collection device may be a camera for collecting facial identity features of persons, or may be a fingerprint scanner for collecting fingerprint information of persons, or may be a voice recording device for collecting voice information of persons, or the like.

The preset range may be an area of a fixed size in front of a door of a home, or an area in which the collection device can collect the person identity information, or the like. All persons in the preset range are persons entering the home (including family members and non-family members).

The router 102 is configured to store family member identity features and home device information, obtain and recognize the person identity information collected by the collection device 101 in the preset range, and when there is a non-family member in the preset range, enable a guest mode.

The guest mode is a mode in which a person can normally access a network but does not have permission to modify configuration information of the router.

Optionally, the router 102 is further configured to enable a kid mode when there is a kid in the preset range.

The kid mode is a mode in which only a preset network and application can be accessed.

The present invention is further applicable to another system for adjusting a network mode. As shown in FIG. 2, the system includes: a collection device 201, a server 202, and a router 203.

The collection device 201 is configured to collect person identity information in a preset range. The person identity information includes identity features of all persons in the preset range and a quantity of persons in the preset range in a preset period.

The server 202 is configured to store family member identity features and home device information, obtain and recognize the person identity information collected by the collection device 201 in the preset range, and when there is a non-family member in the preset range, send an instruction of enabling a guest mode to the router 203, or when there is a kid in the preset range, send an instruction of enabling a kid mode to the router 203.

The router 203 is configured to enable the guest mode or enable the kid mode according to the instruction sent by the server 202.

The present invention is further applicable to another system for adjusting a network mode. As shown in FIG. 3, the system includes: a collection device 301, an identity feature recognition device 302, a server 303, and a router 304.

The collection device 301 is configured to collect person identity information in a preset range. The person identity information includes identity features of all persons in the preset range and a quantity of persons in the preset range in a preset period.

The identity feature recognition device 302 is configured to store family member identity features, obtain and recognize the person identity information collected by the collection device 301 in the preset range, and determine identities of the persons in the preset range by comparing the family member identity features with the person identity features in the preset range.

The server 303 is configured to obtain the identities of the persons determined by the identity recognition device 302 in the preset range, and when there is a non-family member in the preset range, send an instruction of enabling a guest mode to the router 304, or when there is a kid in the preset range, send an instruction of enabling a kid mode to the router 304.

The router 304 is configured to enable the guest mode or enable the kid mode according to the instruction sent by the server 303.

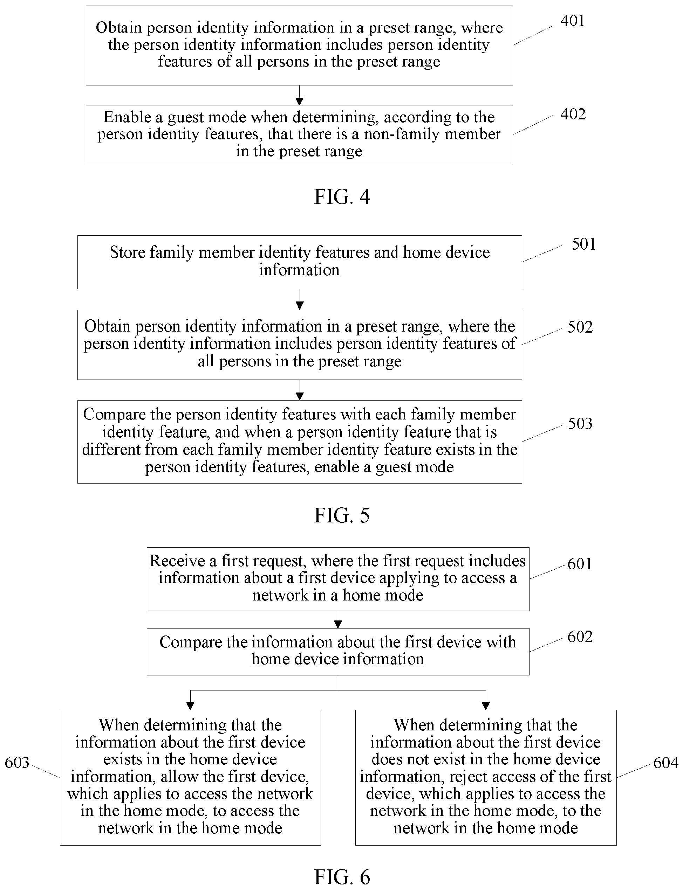

With reference to FIG. 1 to FIG. 3, the present invention provides a method for adjusting a network mode, and the method is applied to the router in any system shown in FIG. 1 to FIG. 3. As shown in FIG. 4, the method includes:
401: Obtain person identity information in a preset range. The person identity information includes person identity features of all persons in the preset range.
402: Enable a guest mode when determining, according to the person identity features, that there is a non-family member in the preset range.

According to the method for adjusting a network mode provided in this embodiment of the present invention, person identity information in a preset range is obtained, where the person identity information includes person identity features of all persons in the preset range; then, when it is determined, according to the person identity features, that there is a non-family member in the preset range, a guest mode is enabled. Compared with the prior art in which a guest mode can only be manually enabled, in the present invention, a person identity feature can be recognized, and when it is determined that there is a non-family member in a preset range, the guest mode is automatically enabled. Because the guest mode is enabled in real time, a guest device can access a network only in the guest mode, ensuring security of a home network.

Further, with reference to FIG. 1 to FIG. 4, when the method shown in FIG. 4 is applied to the system in FIG. 1, the collection device collects the person identity information in the preset range, and the router enables the guest mode when it is determined, by recognizing the person identity features collected by the collection device in the preset range, that there is a non-family member in the preset range.

When the method shown in FIG. 4 is applied to the system in FIG. 2, the collection device collects the person identity information in the preset range, and the server controls the router to enable the guest mode when it is determined, by recognizing the person identity features collected by the collection device in the preset range, that there is a non-family member in the preset range.

When the method shown in FIG. 4 is applied to the system shown in FIG. 3, the collection device collects the person identity information in the preset range, the identity feature recognition module determines, by recognizing the person identity features collected by the collection device in the preset range, whether there is a non-family member in the preset range, and after receiving information indicating that the identity feature recognition module determines that there is a non-family member in the preset range, the server controls the router to enable the guest mode.

The present invention further provides a method for adjusting a network mode. As shown in FIG. 5, the method includes:
501: Store family member identity features and home device information.

The family member identity features include a family adult identity feature and a family kid identity feature. The home device information includes home adult device information and home kid device information.

It should be noted that, each family member identity feature may be stored in association with information about each home device, or family member information and the home device information may be stored separately. In addition, when a device is shared by an adult and a kid among family members, the kid device information may also be stored as adult device information.

It should be further noted that, family member features and the home device information need to be stored only once in advance, and then the family member may modify the stored family member features and home device information according to a requirement.

502: Obtain person identity information in a preset range. The person identity information includes person identity features of all persons in the preset range.

503: Compare the person identity features of all the persons in the preset range with each family member identity feature, and when a person identity feature that is different from each family member identity feature exists in the person identity features, enable a guest mode.

It should be noted that, modes of a router in the present invention further includes a home mode.

The home mode is a mode in which a network may be normally accessed, and configuration information of the router may be modified.

To ensure security of a home network, when a device applying to access the network in the home mode sends an application request, the request needs to be authenticated. As shown in FIG. 6, the present invention provides a method for authenticating a request of accessing a network in a home mode in a method for adjusting a network mode, which is specifically as follows:
601: Receive a first request, where the first request includes information about a first device applying to access a network in the home mode.
   The first request is a request of applying to access a network in a home mode, the first request includes information about a first device, and the information about the first device is information about a device accessing the network in the home mode.
602: Compare the information about the first device with home device information.
603: When determining that the information about the first device exists in the home device information, allow the first device, which applies to access the network in the home mode, to access the network in the home mode.
604: When determining that the information about the first device does not exist in the home device information, forbid the first device, which applies to access the network in the home mode, to access the network in the home mode.

When the information about the first device does not exist in the home device information, it indicates that the first device is not a home device, and therefore, the first device is forbidden to access the network in the home mode.

According to the method for adjusting a network mode provided in this embodiment of the present invention, after a guest mode is enabled, a home device still accesses a network in a home mode, to avoid that when a password for accessing the network in the home mode is the same as a password for accessing the network in the guest mode, a guest device may also access the network in the home mode. Therefore, when a device applies to access the network in the home mode, a router recognizes whether the device applying to access the network in the home mode is a home device, and when the device is not a home device, the device is forbidden to access the network in the home mode, to avoid that a guest device still accesses the network in the home mode if the guest mode is enabled. Only the home device can access the network in the home mode, ensuring that a guest device does not obtain a right to modify configuration information of the router, and more effectively ensuring security of a home network.

Optionally, as another embodiment of the present invention, after obtaining person identity information in a preset range, person identity features in the person identity information are compared with each family member identity feature, and when the kid identity feature exists in the person identity features, a kid mode is enabled.

The kid mode is a mode in which only a preset network and application can be accessed.

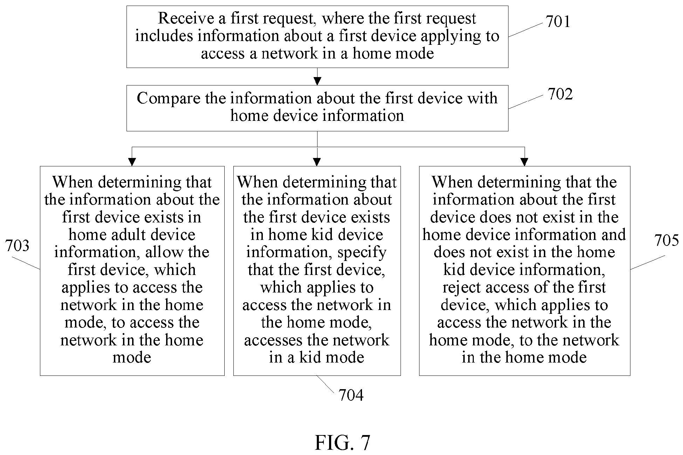

With reference to FIG. 6, after the kid mode is enabled, the present invention further provides another method for authenticating a request of accessing a network in a home mode in a method for adjusting a network mode. As shown in FIG. 7, the method includes:
701: Receive a first request, where the first request includes information about a first device applying to access a network in a home mode.
702: Compare the information about the first device with home device information.
703: When determining that the information about the first device exists in home adult device information, allow the first device, which applies to access the network in the home mode, to access the network in the home mode.

It may be understood that, when the information about the first device exists in the home adult device information, it indicates that the first device is an adult device, and the adult device can normally access the network in the home mode, and has a right to modify configuration information of a router.

704: When determining that the information about the first device exists in home kid device information, specify that the first device, which applies to access the network in the home mode, accesses the network in a kid mode.

It should be noted that, when the information about the first device exists in the home kid device information, it indicates that the first device is a kid device, and in this case, the kid mode is already enabled; therefore, the kid device may access the network in the kid mode.

705: When determining that the information about the first device does not exist in the home device information and does not exist in the home kid device information, forbid the first device, which applies to access the network in the home mode, to access the network in the home mode.

According to the method for adjusting a network mode provided in this embodiment of the present invention, after a kid mode is enabled, a router not only recognizes whether a first device applying to access a network in a home mode is a home device, but also recognizes whether the first device is a home adult device or a home kid device. When the device is a home kid device, it is specified that the device accesses the network in the kid mode, and if the device accesses the network in the kid mode, the device can only accesses a preset network and application, but does not have a right to modify configuration information of the router, avoiding a loss caused by a misoperation of a kid on the Internet, and ensuring security of a home network.

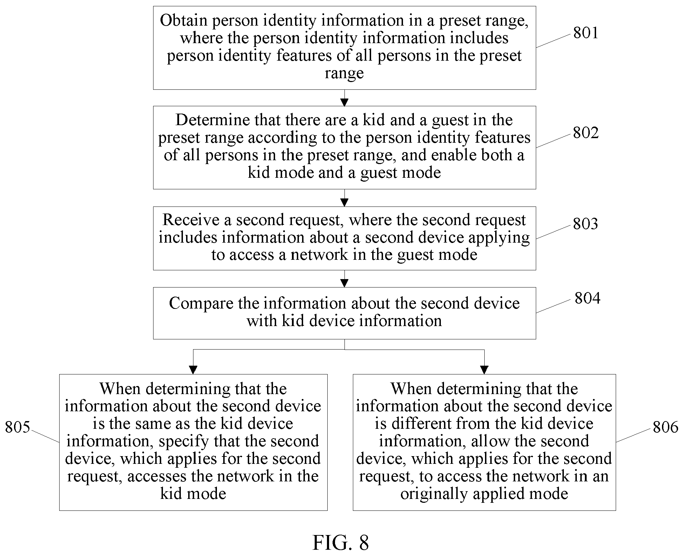

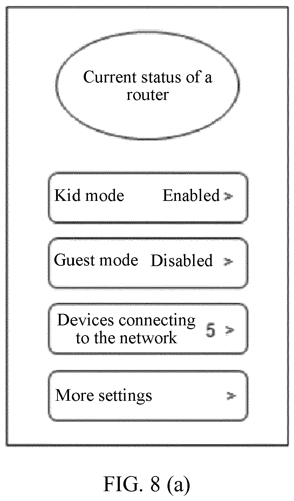

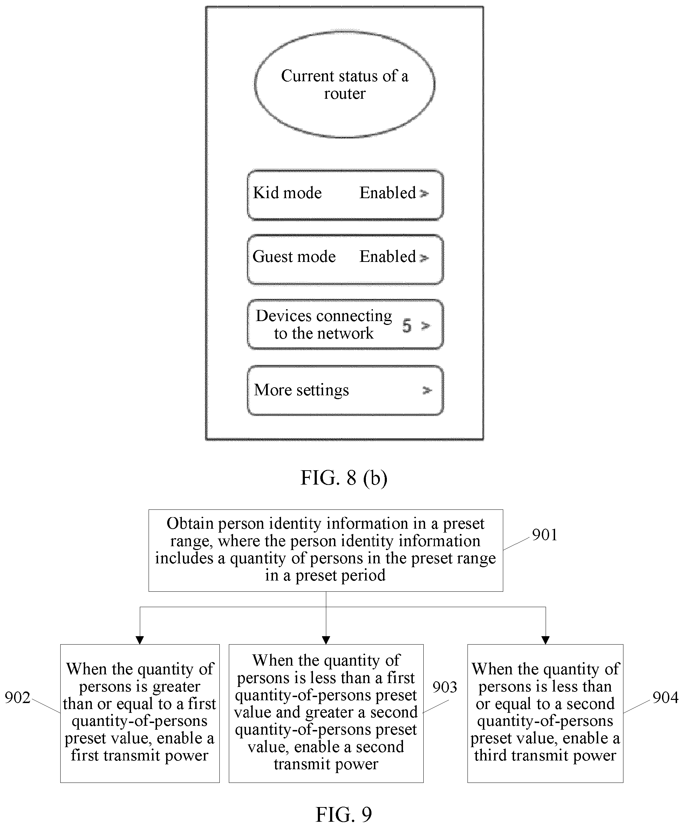

The present invention further provides a method for adjusting a network mode. As shown in FIG. 8, the method includes:
801: Obtain person identity information in a preset range. The person identity information includes person identity features of all persons in the preset range.
802: Determine that there are a kid and a guest in the preset range according to the person identity features of all the persons in the preset range, and enable both a kid mode and a guest mode.

The person identity features are compared with each family member identity feature. When a kid identity feature exists in the person identity features, the kid mode is enabled, and when it is determined that there is a non-family member in the preset range, the guest mode is enabled.

It should be noted that, a normal mode of a router is a home mode, and when the router is in an enabled state, the home mode is always enabled so that a family member can access the network. However, whether the kid mode and the guest mode are enabled needs to be determined.

It may be understood that, the home mode, the guest mode, and the kid mode of the router may keep an enabled state at the same time.

Optionally, if there is no guest in the preset range, in this case, only the kid mode needs to be enabled in this step, and for ease of description, enabling the kid mode and the guest mode is used as an example for description. When only the kid mode is enabled, a setting interface of the router is shown in FIG. 8 (a); when both the kid mode and the guest mode are enabled, a setting interface of the router is shown in FIG. 8 (b).

803: Receive a second request, where the second request includes information about a second device applying to access a network in the guest mode.

The second request is a request of applying to access a network in a guest mode, the second request includes information about a second device, and the information about the second device is the information about the second device applying to access the network in the guest mode.

804: Compare the information about the second device with kid device information.

805: When determining that the information about the second device is the same as the kid device information, specify that the second device, which applies for the second request, accesses the network in the kid mode.

When it is determined that the information about the second device is the same as the kid device information, it is specified that the device accesses the network in the kid mode.

It should be noted that, a kid device needs to access the network in the home mode, but after accessing the network, the kid device can access only a preset network and application, and cannot modify configuration information of the router. If the kid mode is not enabled, the kid device may be used as a home adult device, and normally accesses the network in the home mode. If the kid mode is enabled, information about a device applying to access the network in the home mode or the guest mode needs to be compared with the kid device information, to ensure a device used by a kid can access only the preset network and application.

806: When determining that the information about the second device is different from the kid device information, allow the second device, which applies for the second request, to access the network in the guest mode.

It should be noted that, when the information about the second device is different from the kid device information, it indicates that the second device is a guest device or an adult device in a family, and in this case, the device is allowed to access the work in a mode originally applied for, that is, the guest mode.

With reference to the method process shown in FIG. 6 to FIG. 8, for any device applying to access a network in a home mode, a router needs to compare information about the device with home device information, and when it is determined that the device is a home adult device, the device is allowed to normally access the network in the home mode; when it is determined that the device is a kid device, if a kid mode is enabled, the device is allowed to access the network in the home mode, but can access only a preset network and application; or when it is determined that the device is a non-family member device, the device is forbidden to access the network in the home mode.

Further, if the kid mode is enabled, for any device applying to access the network in a guest mode, the router needs to compare information about the device with kid device information, and when it is determined that the device is a kid device, it is specified that the device accesses the network in the kid mode.

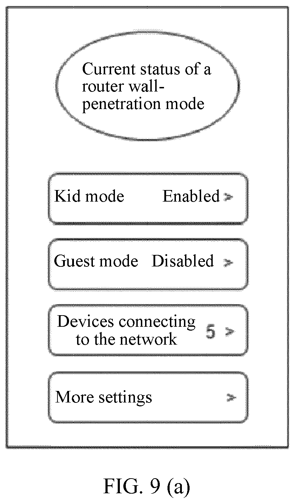

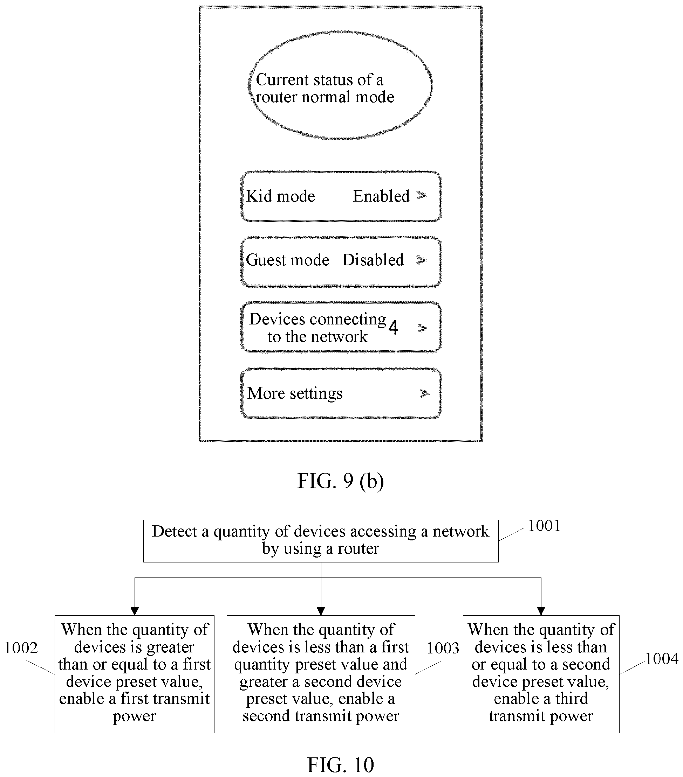

Optionally, the present invention further provides a method for adjusting a transmit power of a router in a method for adjusting a network mode. In the method, person identity information further includes a quantity of persons in a preset range in a preset period, and as shown in FIG. 9, the method includes:
901: Obtain person identity information in a preset range. The person identity information includes a quantity of persons in the preset range in a preset period.
   It should be noted that, the preset period may be one natural day or half of a natural day, a period of time from 0 to 24 o'clock is one natural day, and a period from 0 to 12 o'clock and a period from 12 to 24 o'clock are each half of a natural day. In one natural day or half of a natural day, a collection device follows a movement track of a person in the preset range, determines whether the person enters a door, and counts in real time the quantity of persons entering the door in one natural day or half of a natural day, and the quantity of persons represents a quantity of devices that may access the network by using a same router.
902: When the quantity of persons is greater than or equal to a first quantity-of-persons preset value, enable a first transmit power.

The first transmit power is a transmit power that makes a signal sent by a router reach a relatively high value, and is commonly known as a wall-penetration mode of the router. The first quantity-of-persons preset value is determined according to an actual situation, for example, may be set to five, that is, when the quantity of persons entering the door exceeds five, the wall-penetration mode is enabled, ensuring that signals are strong and stable when devices of multiple persons entering the door are connected to the network. When the wall-penetration mode is enabled, a display interface of the router may be shown in FIG. 9 (a), a quantity of devices connected to the network in FIG. 9 (a) is the quantity of persons in the preset range in the preset period in step 901, and it can be seen that, in this case, the quantity of persons is five.

It should be noted that, regardless of whether the guest mode and the kid mode are enabled, the router may adjust the transmit power, and that the kid mode is enabled but the guest mode is not enabled is shown as an example in FIG. 9 (a).

903: When the quantity of persons is less than a first quantity-of-persons preset value and greater a second quantity-of-persons preset value, enable a second transmit power.

The second transmit power is a transmit power that makes a signal sent by a router reach a standard value, and is commonly known as a normal mode of the router. The second quantity-of-persons preset value is absolutely less than the first preset value, and a specific value of the second quantity-of-persons preset value is determined according to an actual situation, and may be generally set to zero, that is, when the quantity of persons entering the door is greater than zero and less than five, the normal mode is enabled, ensuring a basic network connection requirement of the devices of the persons entering the door. When the normal mode is enabled, the display interface of the router is shown in FIG. 9 (b). It can be seen from FIG. 9 (b) that, in this case, the quantity of persons is four.

904: When the quantity of persons is less than or equal to a second quantity-of-persons preset value, enable a third transmit power.

The third transmit power is a transmit power that makes a signal sent by a router reach a minimum value, and is commonly known as an energy saving mode of the router. For example, when the second preset value is zero, that is, when no person enters the door, the energy saving mode is enabled.

According to the method for adjusting a transmit power of a router provided in this embodiment of the present invention, a quantity of persons in a preset range in a preset period is obtained to adjust a transmit power of a router, and when the quantity of persons is greater than or equal to a first quantity-of-persons preset value, a first transmit power, that is, a relatively high transmit power, is enabled, to ensure that network signals are strong and stable when devices of multiple persons are connected to a network by using the router; when the quantity of persons is less than the first preset value and greater than a second quantity-of-persons preset value, a second transmit power is enabled, ensuring a basic requirement that a device of a person entering a home is connected to the network by means of the router; when the quantity of persons is less than or equal to the second quantity-of-persons preset value, a third transmit power is enabled, that is, if there is no person or few persons, energy consumption is reduced. In the method of adjusting a transmit power of a router according to a requirement, while security of a home network is ensured, signal quality is ensured when there is a relatively large quantity of persons, and energy consumption is also reduced when there is a relatively small quantity of persons. Moreover, when there is a relatively large quantity of persons, a relatively high power is enabled, and when there is a relatively small quantity of persons, a relatively low transmit power is enabled, which can further reduce radiation of network devices on human bodies while ensuring signal quality.

The present invention further provides another method for adjusting a transmit power of a router in a method for adjusting a network mode. As shown in FIG. 10, the method includes:
1001: Detect a quantity of devices accessing a network by using a router.
1002: When the quantity of devices is greater than or equal to a first device preset value, enable a first transmit power.
1003: When the quantity of devices is less than the first quantity-of-persons preset value and greater a second device preset value, enable a second transmit power.
1004: When the quantity of devices is less than or equal to the second device preset value, enable a third transmit power.

It should be noted that, specific values of the first device preset value and the second device preset value in steps 1002, 1003, and 1004 may be the same as values of the first quantity-of-persons preset value and the second quantity-of-persons preset value in steps 902, 903, and 904 respectively.

According to the method for adjusting a transmit power of a router provided in this embodiment of the present invention, a quantity of devices accessing a network by using the router is detected to adjust a transmit power of a router, and when the quantity of devices is greater than or equal to a first device preset value, a first transmit power, that is, a relatively high transmit power, is enabled, to ensure that network signals are strong and stable when multiple devices are connected to the network by using the router; when the quantity of devices is less than the first device preset value and greater than a second device preset value, a second transmit power is enabled, ensuring a basic requirement that a device in a home is connected to the network by using the router; or when the quantity of persons is less than or equal to the second device preset value, a third transmit power is enabled, that is, if there is no person or few persons, energy consumption is reduced. In the method of adjusting a transmit power of a router according to a requirement, while security of a home network is ensured, signal quality is ensured when there is a relatively large quantity of devices, and energy consumption is also reduced when there is a relatively small quantity of devices. When there is a relatively large quantity of devices, a relatively high power is enabled, and when there is a relatively small quantity of devices, a relatively low transmit power is enabled, which can further reduce radiation of network devices on human bodies while ensuring signal quality.

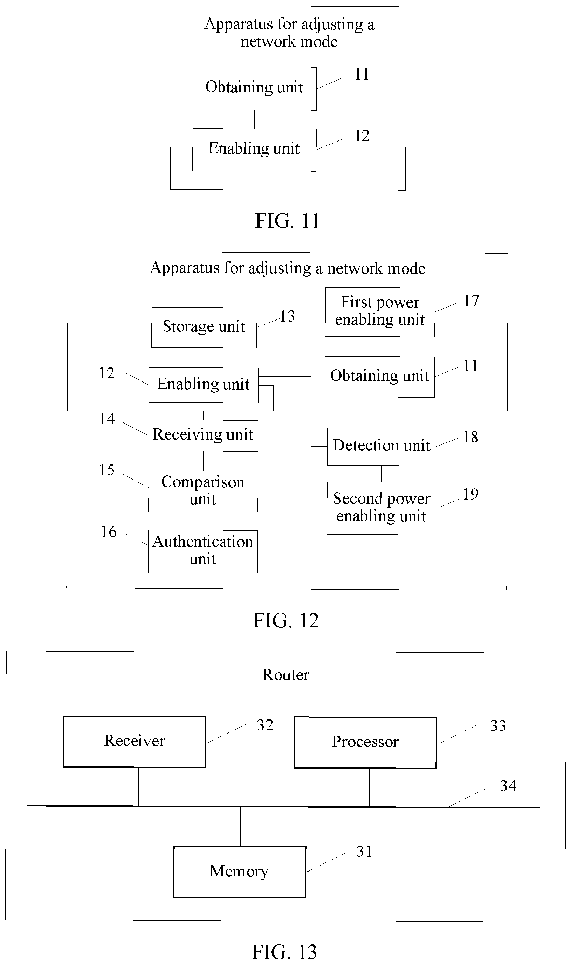

With reference to the description in FIG. 4 to FIG. 10, the present invention provides an apparatus for adjusting a network mode. As shown in FIG. 11, the apparatus includes: an obtaining unit 11 and an enabling unit 12.

The obtaining unit 11 is configured to obtain person identity information in a preset range. The person identity information includes person identity features of all persons in the preset range.

The enabling unit 12 is configured to enable a guest mode when determining, according to the person identity features obtained by the obtaining unit 11, that there is a non-family member in the preset range.

According to the apparatus for adjusting a network mode provided in this embodiment of the present invention, the obtaining unit obtains person identity information in a preset range. The person identity information includes person identity features of all persons in the preset range; then, the enabling unit enables a guest mode when determining, according to the person identity features, that there is a non-family member in the preset range. Compared with the prior art in which a guest mode can only be manually enabled, in the present invention, a person identity feature can be recognized, and when it is determined that there is a non-family member in a preset range, the guest mode is automatically enabled. Because the guest mode is enabled in real time, a guest device can access a network only in the guest mode, ensuring security of a home network.

Further, with reference to FIG. 11, the present invention further provides an apparatus for adjusting a network mode. As shown in FIG. 12, the apparatus further includes: a storage unit 13.

The storage unit 13 is configured to store family member identity features.

The enabling unit 12 is further configured to compare the person identity features obtained by the obtaining unit 11 with each family member identity feature stored in the storage unit 13, and when a person identity feature that is different from each family member identity feature exists in the person identity features, enable the guest mode.

The storage unit is further configured to store home device information, where the home device information includes home adult device information and home kid device information.

Further, as shown in FIG. 12, the apparatus further includes: a receiving unit 14, a comparison unit 15, and an authentication unit 16.

The receiving unit 14 is configured to: after the enabling unit 12 enables the guest mode, receive a first request, where the first request includes information about a first device applying to access a network in a home mode.

The comparison unit 15 is configured to compare the information about the first device with the home device information stored in the storage unit 13, and provide a comparison result to the authentication unit 16.

The authentication unit 16 is configured to: when determining, according to the comparison result provided by the comparison unit 15, that the information about the first device exists in the home device information, allow the first device, which applies to access the network in the home mode, to access the network in the home mode; or when determining, according to the comparison result provided by the comparison unit 15, that the information about the first device does not exist in the home device information, forbid the first device, which applies to access the network in the home mode, to access the network in the home mode.

Further, the family member identity features include a family adult identity feature and a family kid identity feature. The enabling unit 12 is further configured to compare the person identity features obtained by the obtaining unit 11 with each family member identity feature stored in the storage unit 13, and when the kid identity feature exists in the person identity features, enable a kid mode, where the kid mode is a mode in which only a preset network and application can be accessed.

The authentication unit 16 is further configured to: when determining, according to the comparison result provided by the comparison unit 15, that the information about the first device exists in the home adult device information, allow the first device, which applies to access the network in the home mode, to access the network in the home mode; when determining that the information about the first device exists in the home kid device information, specify that the first device, which applies to access the network in the home mode, accesses the network in the kid mode; or when determining that the information about the first device does not exist in the home adult device information and does not exist in the home kid device information, forbid the first device, which applies to access the network in the home mode, to access the network in the home mode.

The receiving unit 14 is further configured to: after the enabling unit 12 enables the kid mode, receive a second request, where the second request includes information about a second device applying to access the network in the guest mode.

The comparison unit 15 is further configured to compare the information about the second device with kid device information.

The authentication unit 16 is further configured to: when determining that the information about the second device is the same as the kid device information, specify that the second device, which applies for the second request, accesses the network in the kid mode; or when determining that the information about the second device is different from the kid device information, allow the second device, which applies for the second request, to access the network according to a mode originally applied for.

It should be noted that, the person identity information obtained by the obtaining unit 11 in the preset range further includes a quantity of persons in the preset range in a preset period.

Further, as shown in FIG. 12, the apparatus further includes: a first power enabling unit 17.

The first power enabling unit 17 is configured to: when the quantity of persons is greater than or equal to a first quantity-of-persons preset value, enable a first transmit power; when the quantity of persons is less than the first quantity-of-persons preset value and greater than a second quantity-of-persons preset value, enable a second transmit power; or when the quantity of persons is less than or equal to a third quantity-of-persons preset value, enable a third transmit power.

The first transmit power is a transmit power that makes a signal sent by a router reach a relatively high value, and is commonly known as a wall-penetration mode of the router. The second transmit power is a transmit power that makes a signal sent by a router reach a standard value, and is commonly known as a normal mode of the router. The third transmit power is a transmit power that makes a signal sent by a router reach a minimum value, and is commonly known as an energy saving mode of the router.

Optionally, as shown in FIG. 12, the apparatus further includes: a detection unit 18 and a second power enabling unit 19.

The detection unit 18 is configured to detect a quantity of devices accessing the network by using the router.

The second power enabling unit 19 is configured to: when the quantity of persons is greater than or equal to a first device preset value, enable a first transmit power; when the quantity of persons is less than the first device preset value and greater than a second device preset value, enable a second transmit power; or when the quantity of persons is less than or equal to a third device preset value, enable a third transmit power.

It should be noted that, the first power enabling unit 17 shown in FIG. 12 has a function of adjusting the transmit power of the router, and the second power enabling unit 19 also has a function of adjusting the transmit power of the router, but the first power enabling unit 17 and the second power enabling unit 19 adjust the transmit power of the router in different manners. In the apparatus for adjusting a network mode, only the first power enabling unit 17 may be used to adjust the transmit power of the router, or only the second power enabling unit 19 may be used to adjust the transmit power of the router, or the first power enabling unit 17 or the second power enabling unit 19 may be selected to adjust the transmit power of the router.

According to the apparatus for adjusting a network mode provided in this embodiment of the present invention, the obtaining unit obtains person identity information in a preset range. The person identity information includes person identity features of all persons in the preset range; then, the enabling unit enables a guest mode when determining, according to the person identity features, that there is a non-family member in the preset range. Compared with the prior art in which a guest mode can only be manually enabled, in the present invention, a person identity feature can be recognized, and when it is determined that there is a non-family member in a preset range, the guest mode is automatically enabled. Because the guest mode is enabled in real time, a guest device can access a network only in the guest mode, ensuring security of a home network.

As shown in FIG. 13, FIG. 13 is a schematic structural diagram of hardware of a router in the system shown in Fig. 1. The router may include a memory 31, a receiver 32, a processor 33, and a bus 34, where the memory 31, the receiver 32, and the processor 33 communicatively connected by using the bus 34.

The memory 31 may be a read-only memory (Read Only Memory, ROM), a static storage device, a dynamic storage device, or a random access memory (Random Access Memory, RAM). The memory 31 may store an operating system and another application program. When the technical solution provided in this embodiment of the present invention is implemented by using software and firmware, program code for implementing the technical solution provided in this embodiment of the present invention is stored in the memory 31, and is executed by the processor 33.

The transceiver 32 is used for communication between the apparatus and another device or a communications network (for example, but not limited to, an Ethernet, a radio access network (Radio Access Network, RAN), or a wireless local area network (Wireless Local Area Network, WLAN).

The processor 33 may be a general central processing unit (Central Processing Unit, CPU), a microprocessor, an application-specific integrated circuit (Application Specific Integrated Circuit, ASIC), or one or more integrated circuits, and is configured to execute a related program, so as to implement the technical solution provided in the embodiment of the present invention.

The bus 34 may include a channel, transmitting a message between components (for example, the memory 31, the receiver 32, and the processor 33) in the apparatus.

It should be noted that, although the hardware shown in FIG. 13 includes only the memory 31, the transceiver 32, the processor 33, and the bus 34, in a specific implementation process, a person skilled in the art should understand that the terminal further includes another component that is essential for implementing normal running. In addition, a person skilled in the art should understand that, the terminal may further include a hardware component for implementing another function.

Specifically, when the router shown in FIG. 13 is used to implement the apparatus shown in the embodiments in FIG. 11 to FIG. 12, the receiver 32 in the apparatus is configured to obtain person identity information in a preset range. The person identity information includes person identity features of all persons in the preset range, and provide the person identity information in the preset range to the processor 33.

The processor 33 is coupled with the memory 31 and the receiver 32, is configured to control execution of a program instruction, and is specifically configured to: when determining, according to the person identity features, that there is a non-family member in the preset range, enable a guest mode.

Further, the memory 31 is further configured to store family member identity features.

The processor 33 is further configured to compare the person identity features obtained by the receiver 32 with each family member identity feature stored in the memory 31, and when a person identity feature that is different from each family member identity feature exists in the person identity features, enable the guest mode.

It should be noted that, the family member identity features include a family adult identity feature and a family kid identity feature.

The memory 31 is further configured to store home device information, where the home device information includes home adult device information and home kid device information.

The receiver 32 is further configured to receive a first request, where the first request includes information about a first device applying to access a network in a home mode.

The processor 33 is further configured to compare the information about the first device with the home device information, and when determining that the information about the first device exists in the home device information, allow the first device, which applies to access the network in the home mode, to access the network in the home mode; or when determining that the information about the first device does not exist in the home device information, forbid the first device, which applies to access the network in the home mode, to access the network in the home mode.

The processor 33 is further configured to compare the person identity features obtained by the receiver 32 with each family member identity feature stored in the memory 31, and when a kid identity feature exists in the person identity features, enable a kid mode, where the kid mode is a mode in which only a preset network and application can be accessed.

The processor 33 is further configured to: after comparing the information about the first device with the home device information, when determining that the information about the first device exists in the home adult device information, allow the first device, which applies to access the network in the home mode, to access the network in the home mode; when determining that the information about the first device exists in the home kid device information, specify that the first device, which applies to access the network in the home mode, accesses the network in the kid mode; or when determining that the information about the first device does not exist in the home adult device information and does not exist in the home kid device information, forbid the first device, which applies to access the network in the home mode, to access the network in the home mode.

Further, the receiver 32 is further configured to receive a second request, where the second request includes information about a second device applying to access the network in the guest mode.

The processor 33 is further configured to: compare the information about the second device with the kid device information, and when determining that the information about the second device is the same as the kid device information, specify that the second device, which applies for the second request, accesses the network in the kid mode; or when determining that the information about the second device is different from the kid device information, allow the second device, which applies for the second request, to access the network in the guest mode.

The person identity information obtained by the receiver 32 in the preset range includes a quantity of persons in the preset range in a preset period.

The processor 33 is further configured to: when the quantity of persons is greater than or equal to a first quantity-of-persons preset value, enable a first transmit power; when the quantity of persons is less than the first quantity-of-persons preset value and greater than a second quantity-of-persons preset value, enable a second transmit power; or when the quantity of persons is less than or equal to a third quantity-of-persons preset value, enable a third transmit power.

The first transmit power is a transmit power that makes a signal sent by a router reach a relatively high value, and is commonly known as a wall-penetration mode of the router. The second transmit power is a transmit power that makes a signal sent by a router reach a standard value, and is commonly known as a normal mode of the router. The third transmit power is a transmit power that makes a signal sent by a router reach a minimum value, and is commonly known as an energy saving mode of the router.

Optionally, the processor 33 is further configured to detect a quantity of devices accessing the network by using the router; when the quantity of devices is greater than or equal to a first device preset value, enable a first transmit power; when the quantity of devices is less than the first device preset value and greater than a second preset value, enable a second transmit power; or when the quantity of devices is less than or equal to a third device preset value, enable a third transmit power.

The present invention further provides a computer program product, including computer program code, where when a computing unit executes the computer program code, this computing unit executes actions as recorded in FIG. 1 to FIG. 10.

According to the apparatus for adjusting a network mode provided in this embodiment of the present invention, the receiver obtains person identity information in a preset range. The person identity information includes person identity features of all persons in the preset range; then, the processor enables a guest mode when determining, according to the person identity features, that there is a non-family member in the preset range. Compared with the prior art in which a guest mode can only be manually enabled, in the present invention, a person identity feature can be recognized, and when it is determined that there is a non-family member in a preset range, the guest mode is automatically enabled. Because the guest mode is enabled in real time, a guest device can access a network only in the guest mode, ensuring security of a home network.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for adjusting a network mode, wherein the method is applied to a router, and the method comprises:
obtaining person identity information in a preset range, wherein the person identity information comprises person identity features of all persons in the preset range; and
enabling a guest mode when determining, according to the person identity features, that there is a non-family member in the preset range.

2. The method for adjusting a network mode according to claim 1, wherein before the obtaining person identity information in a preset range, the method further comprises:
storing family member identity features; and
the enabling a guest mode when determining, according to the person identity features, that there is a non-family member in the preset range comprises:
comparing the person identity features with each family member identity feature, and when a person identity feature that is different from each family member identity feature exists in the person identity features, enabling the guest mode.

3. The method for adjusting a network mode according to claim 1 or 2, wherein before the obtaining person identity information in a preset range, the method further comprises:
storing home device information, wherein the home device information comprises home adult device information and home kid device information.

4. The method for adjusting a network mode according to claim 3, wherein after the enabling a guest mode when determining, according to the person identity features, that there is a non-family member in the preset range, the method further comprises:
receiving a first request, wherein the first request comprises information about a first device applying to access a network in a home mode;
comparing the information about the first device with the home device information; and
when determining that the information about the first device exists in the home device information, allowing the first device, which applies to access the network in the home mode, to access the network in the home mode; or
when determining that the information about the first device does not exist in the home device information, forbidding the first device, which applies to access the network in the home mode, to access the network in the home mode.

5. The method for adjusting a network mode according to any one of claims 2 to 4, wherein the family member identity features comprise a family adult identity feature and a family kid identity feature, and after the obtaining all person identity information in a preset range, the method further comprises:
comparing the person identity features with each family member identity feature, and when the family kid identity feature exists in the person identity features, enabling a kid mode, wherein the kid mode is a mode in which only a preset network and application can be accessed.

6. The method for adjusting a network mode according to claim 5, wherein after the comparing the information about the first device with the home device information, the method further comprises:
when determining that the information about the first device exists in the home adult device information, allowing the first device, which applies to access the network in the home mode, to access the network in the home mode;
when determining that the information about the first device exists in the home kid device information, specifying that the first device, which applies to access the network in the home mode, accesses the network in the kid mode; or
when determining that the information about the first device does not exist in the home device information and does not exist in the home kid device information, forbidding the first device, which applies to access the network in the home mode, to access the network in the home mode.

7. The method for adjusting a network mode according to claim 5 or 6, wherein after the comparing the person identity features with each family member identity feature, and when the kid identity feature exists in the person identity features, enabling a kid mode, the method further comprises:
receiving a second request, wherein the second request comprises information about a second device applying to access the network in the guest mode;
comparing the information about the second device with the kid device information; and
when determining that the information about the second device is the same as the kid device information, specifying that the second device, which applies for the second request, accesses the network in the kid mode, or
when determining that the information about the second device is different from the kid device information, allowing the second device, which applies for the second request, to access the network in the guest mode.

8. The method for adjusting a network mode according to any one of claims 1 to 7, wherein the person identity information in the preset range further comprises a quantity of persons in the preset range in a preset period, and after the obtaining person identity information in a preset range, the method further comprises:
when the quantity of persons is greater than or equal to a first quantity-of-persons preset value, enabling a first transmit power;
when the quantity of persons is less than the first quantity-of-persons preset value and greater than a second quantity-of-persons preset value, enabling a second transmit power; or
when the quantity of persons is less than a third quantity-of-persons preset value, enabling a third transmit power.

9. The method for adjusting a network mode according to any one of claims 1 to 7, wherein the method further comprises:
detecting a quantity of devices accessing the network by using the router; and
when the quantity of devices is greater than or equal to a first device preset value, enabling a first transmit power;
when the quantity of devices is less than the first device preset value and greater than a second device preset value, enabling a second transmit power; or
when the quantity of devices is less than or equal to a third device preset value, enabling a third transmit power.

10. An apparatus for adjusting a network mode, wherein the apparatus is applied to a router, and comprises:
an obtaining unit, configured to obtain person identity information in a preset range, wherein the person identity information comprises person identity features of all persons in the preset range; and
an enabling unit, configured to enable a guest mode when determining, according to the person identity features obtained by the obtaining unit, that there is a non-family member in the preset range.

11. The apparatus for adjusting a network mode according to claim 10, wherein the apparatus further comprises: a storage unit, wherein
the storage unit is configured to store family member identity features; and
the enabling unit is further configured to compare the person identity features obtained by the obtaining unit with each family member identity feature stored in the storage unit, and when a person identity feature that is different from the each family member identity feature exists in the person identity features, enable the guest mode.

12. The apparatus for adjusting a network mode according to claim 10 or 11, wherein
the storage unit is further configured to store home device information, wherein the home device information comprises home adult device information and home kid device information.

13. The apparatus for adjusting a network mode according to claim 12, wherein the apparatus further comprises: a receiving unit, a comparison unit, and an authentication unit, wherein
the receiving unit is configured to: after the enabling unit enables the guest mode, receive a first request, wherein the first request comprises information about a first device applying to access a network in a home mode;
the comparison unit is configured to compare the information about the first device with the home device information stored in the storage unit; and
the authentication unit is configured to: when determining that the information about the first device exists in the home device information, allow the first device, which applies to access the network in the home mode, to access the network in the home mode; or when determining that the information about the first device does not exist in the home device information, forbid the first device, which applies to access the network in the home mode, to access the network in the home mode.

14. The apparatus for adjusting a network mode according to any one of claims 11 to 13, wherein the family member identity features comprise a family adult identity feature and a family kid identity feature; and
the enabling unit is further configured to compare the person identity features obtained by the obtaining unit with each family member identity feature stored in the storage unit, and when the kid identity feature exists in the person identity features, enable a kid mode, wherein the kid mode is a mode in which only a preset network and application can be accessed.

15. The apparatus for adjusting a network mode according to claim 14, wherein
the authentication unit is further configured to: when determining that the information about the first device exists in the home adult device information, allow the first device, which applies to access the network in the home mode, to access the network in the home mode; when determining that the information about the first device exists in the home kid device information, specify that the first device, which applies to access the network in the home mode, accesses the network in the kid mode; or when determining that the information about the first device does not exist in the home adult device information and does not exist in the home kid device information, forbid the first device, which applies to access the network in the home mode, to access the network in the home mode.

16. The apparatus for adjusting a network mode according to claim 14 or 15, wherein
the receiving unit is further configured to: after the enabling unit enables the kid mode, receive a second request, wherein the second request comprises information about a second device applying to access the network in the guest mode;
the comparison unit is further configured to compare the information about the second device with the kid device information; and
the authentication unit is further configured to: when determining that the information about the second device is the same as the kid device information, specify that the second device, which applies for the second request, accesses the network in the kid mode; or when determining that the information about the second device is different from the kid device information, allow the second device, which applies for the second request, to access the network in the guest mode.

17. The apparatus for adjusting a network mode according to any one of claims 10 to 16, wherein the person identity information in the preset range further comprises a quantity of persons in the preset range in a preset period; and
the apparatus further comprises: a first power enabling unit, wherein
the first power enabling unit is configured to: when the quantity of persons is greater than or equal to a first quantity-of-persons preset value, enable a first transmit power; when the quantity of persons is less than the first quantity-of-persons preset value and greater than a second quantity-of-persons preset value, enable a second transmit power; or when the quantity of persons is less than or equal to a third quantity-of-persons preset value, enable a third transmit power.

18. The apparatus for adjusting a network mode according to any one of claims 10 to 16, wherein the apparatus further comprises: a detection unit and a second power enabling unit, wherein
the detection unit is configured to detect a quantity of devices accessing the network by using the router; and
the second power enabling unit is configured to: when the quantity of devices is greater than or equal to a first device preset value, enable a first transmit power; when the quantity of devices is less than the first device preset value and greater than a second device preset value, enable a second transmit power; or when the quantity of devices is less than or equal to a third device preset value, enable a third transmit power.

19. An apparatus for adjusting a network mode, wherein the apparatus is applied to a router, and the method comprises:
a memory, configured to store information that comprises a program instruction; and
a receiver, configured to obtain person identity information in a preset range, wherein the person identity information comprises person identity features of all persons in the preset range; and
a processor, coupled with the memory and the receiver, configured to control execution of the program instruction, and specifically configured to: when determining, according to the person identity features, that there is a non-family member in the preset range, enable a guest mode.

20. The apparatus for adjusting a network mode according to claim 19, wherein
the memory is further configured to store family member identity features; and
the processor is further configured to compare the person identity features with each family member identity feature, and when a person identity feature that is different from each family member identity feature exists in the person identity features, enable the guest mode.

21. The apparatus for adjusting a network mode according to claim 19 or 20, wherein
the memory is further configured to store home device information, wherein the home device information comprises home adult device information and home kid device information.

22. The apparatus for adjusting a network mode according to claim 21, wherein
the receiver is further configured to receive a first request, wherein the first request comprises information about a first device applying to access a network in a home mode; and
the processor is further configured to compare the information about the first device with the home device information; when determining that the information about the first device exists in the home device information, allow the first device, which applies to access the network in the home mode, to access the network in the home mode; or when determining that the information about the first device does not exist in the home device information, forbid the first device, which applies to access the network in the home mode, to access the network in the home mode.

23. The apparatus for adjusting a network mode according to any one of claims 20 to 22, wherein the family member identity features comprise a family adult identity feature and a family kid identity feature; and
the processor is further configured to compare the person identity features with each family member identity feature, and when the kid identity feature exists in the person identity features, enable a kid mode, wherein the kid mode is a mode in which only a preset network and application can be accessed.

24. The apparatus for adjusting a network mode according to claim 23, wherein
the processor is further configured to: after comparing the information about the first device with the home device information, when determining that the information about the first device exists in the home adult device information, allow the first device, which applies to access the network in the home mode, to access the network in the home mode; when determining that the information about the first device exists in the home kid device information, specify that the first device, which applies to access the network in the home mode, accesses the network in the kid mode; or when determining that the information about the first device does not exist in the home adult device information and does not exist in the home kid device information, forbid the first device, which applies to access the network in the home mode, to access the network in the home mode.

25. The apparatus for adjusting a network mode according to claim 23 or 24, wherein
the receiver is further configured to receive a second request, wherein the second request comprises information about a second device applying to access the network in the guest mode; and
the processor is further configured to compare the information about the second device with the kid device information; when determining that the information about the second device is the same as the kid device information, specify that the second device, which applies for the second request, accesses the network in the kid mode; or when determining that the information about the second device is different from the kid device information, allow the second device, which applies for the second request, to access the network in the guest mode.

26. The apparatus for adjusting a network mode according to any one of claims 19 to 25, wherein the person identity information in the preset range further comprises a quantity of persons in the preset range in a preset period; and
the processor is further configured to: when the quantity of persons is greater than or equal to a first quantity-of-persons preset value, enable a first transmit power; when the quantity of persons is less than the first quantity-of-persons preset value and greater than a second quantity-of-persons preset value, enable a second transmit power; or when the quantity of persons is less than or equal to a third quantity-of-persons preset value, enable a third transmit power.

27. The apparatus for adjusting a network mode according to any one of claims 19 to 25, wherein
the processor is further configured to detect a quantity of devices accessing the network by using the router; and when the quantity of devices is greater than or equal to a first device preset value, enable a first transmit power; when the quantity of devices is less than the first device preset value and greater than a second preset value, enable a second transmit power; or when the quantity of devices is less than or equal to a third device preset value, enable a third transmit power.

28. A computer program product, comprising computer program code, wherein when a computing unit executes the computer program code, the computing unit executes actions according to any one of claims 1 to 9.
